# EUROPEAN PATENT APPLICATION

(11) **EP 2 293 119 A1**
(43) Date of publication of application: **09.03.2011**
(21) Application number: 09754557.8
(22) Date of filing: 12.05.2009
(51) Int. Cl.: G02B 1/11, B29C 33/38, B29C 59/02, B29L 11/00

(54) **ANTIREFLECTION FILM AND PROCESS FOR PRODUCING THE ANTIREFLECTION FILM**

(30) Priority: 27.05.2008 JP 2008138444
(71) Applicant: DNP Fine Chemicals Co., Ltd., Kanagawa 226-0022 (JP)
(72) Inventor: SATO Kazuya, Yokohama-shi Kanagawa 226-0022 (JP); MATSUMOTO Tsukasa, Yokohama-shi Kanagawa 226-0022 (JP); WATANABE Yutaka, Niiza-shi Saitama 352-0005 (JP); ROKUHARA Jun, Niiza-shi Saitama 352-0005 (JP)
(74) Representative: von Kreisler Selting Werner
(86) International application number: PCT/JP2009/058810
(87) International publication number: WO 2009/145049

(57) **Abstract**

It is aimed at finding out a surface pattern and physical properties required for an antireflective film having an excellent antireflective property for light, a light transmissivity, and the like, and at providing an antireflective film having such a specific surface pattern and physical properties, and a production method of the antireflective film; and provided for this object, is an antireflective film, obtained by: processing a surface of an aluminum material, by mechanical polishing, chemical polishing and/or electrolytic polishing; subsequently producing a pattern of mold having taper-shaped pores on the surface of the aluminum material, by combining a formation of an anodic oxide coating based on anodic oxidation of the surface of the aluminum material, with etching of the anodic oxide coating; and transferring the pattern of mold onto an antireflective film-forming material; wherein the antireflective film has, on a surface thereof, convexities having an average height between 100nm inclusive and 1,000nm inclusive, or concavities having an average depth between 100nm inclusive and 1,000nm inclusive, and the convexities or concavities are present at an average period between 50nm inclusive and 400nm inclusive, at least in a certain single direction; and wherein the antireflective film has a haze of 15% or less.

## Description

### TECHNICAL FIELD

The present invention relates to an antireflective film having a specific surface pattern and specific physical properties, particularly to an antireflective film for preventing reflection of light to thereby improve light transmission therethrough, and more particularly to an antireflective film for providing a display or the like with an excellent visibility, and to a production method thereof.

### BACKGROUND ART

It is indispensable for a flat panel display (hereinafter abbreviated to "FPD") such as a liquid crystal display (LCD), and plasma display (PDP), to be provided with an antireflective film for ensuring a visibility thereof. As such antireflective films, there have been used (1) one obtained by a typically called "dry method", i.e., one obtained by producing a multilayered dieletric film by a vapor phase process to thereby realize a lower reflectivity by virtue of an optical interference effect; (2) one obtained by a typically called "wet method", i.e., one obtained by coating a low refractive-index material onto a substrate film; and the like. Further, as a technical method (3) fully different from them in principle, it has been known to provide a surface of film with a fine texture to thereby exhibit a lower reflectivity (Patent Document 1 to Patent Document 10).

The method (3) to provide a fine texture to thereby improve a performance of an antireflective film has been variously investigated, and examples of such a method include one configured to once prepare a mold by combining a formation of an anodic oxide coating based on anodic oxidation of aluminum with etching of the anodic oxide coating, in a manner to transfer a pattern of the mold to an antireflective film (Patent Document 11 to Patent Document 13).

However, these antireflective films have been insufficient not only in antireflective property for light, and particularly but also in light transmitting property, and thus have been demanded to be further improved.

### Prior Art document

### Patent Document

Patent Document 1: JP50-070040A
Patent Document 2: JP09-193332A
Patent Document 3: JP2003-162205A
Patent Document 4: JP2003-215314A
Patent Document 5: JP2003-240903A
Patent Document 6: JP2004-004515A
Patent Document 7: JP2004-059820A
Patent Document 8: JP2004-059822A
Patent Document 9: JP2005-010231A
Patent Document 10: JP2005-092099A
Patent Document 11: JP2003-043203A
Patent Document 12: JP2005-156695A
Patent Document 13: JP2007-086283A

### DISCLOSURE OF INVENTION

### PROBLEM TO BE SOLVED BY THE INVENTION

The present invention has been carried out in view of the above-described background art, and it is therefore an object of the present invention to find out a surface pattern and physical properties to be required for an antireflective film having an improved antireflective property for light and an improved light transmissivity, to thereby provide an antireflective film having such a specific surface pattern and physical properties, as well as a production method of such an antireflective film.

### MEANS FOR SOLVING PROBLEM

The present inventors have earnestly conducted investigations so as to achieve the above-described object, and resultingly found out that a deterioration of performance of an antireflective film obtained by transferring thereto a pattern of a mold obtained by an aluminum material is brought about by: a work stress to be caused in the aluminum material upon rolling it; irregularities of a surface of the aluminum material, due to the working itself; irregularities of the surface of the aluminum material, due to an affection from the environment during a manufacturing process thereof, such as dusts and contaminants to be entrained upon working; and the like. Further, to achieve the object, the present inventors have found out that an antireflective film having a desired performance, particularly an improved transmissivity is obtainable by previously processing and finishing a surface of an aluminum material, thereby narrowly reached the present invention.

Namely, the present invention provides an antireflective film, obtained by:
processing a surface of an aluminum material, by mechanical polishing, chemical polishing and/or electrolytic polishing;
subsequently producing a pattern of mold having taper-shaped pores on the surface of the aluminum material, by combining a formation of an anodic oxide coating based on anodic oxidation of the surface of the aluminum material, with etching of the anodic oxide coating; and
transferring the pattern of mold onto an antireflective film-forming material;
wherein the antireflective film has, on a surface thereof, convexities having an average height between 100nm inclusive and 1,000nm inclusive, or concavities having an average depth between 100nm inclusive and 1,000nm inclusive, and the convexities or concavities are present at an average period between 50nm inclusive and 400nm inclusive, at least in a certain single direction; and
wherein the antireflective film has a haze of 15% or less.

Further, the present invention provides a mold having a pattern of taper-shaped pores, for forming the above-described antireflective film, wherein the mold is produced by combining:
anodic oxidation to be conducted in an electrolytic solution, under a condition of an oxalic acid concentration thereof between 0.01M inclusive and 0.5M inclusive, an application voltage between 20V inclusive and 120V inclusive, and a temperature of the electrolytic solution between 0°C inclusive and 50°C inclusive;
with etching to be conducted in an etching solution, under a condition of a phosphoric acid concentration thereof between 1wt% inclusive and 20wt% inclusive, a temperature of the etching solution between 30°C inclusive and 90°C inclusive, and a one-time processing time between 1 minute inclusive and 60 minutes inclusive.

### EFFECT OF THE INVENTION

According to the present invention, it is enabled to provide an antireflective film improved in antireflective property for light, light transmittivity, and the like. Specifically, it is enabled to provide an antireflective film which is particularly improved in light transmissivity, as an antireflective film, transmissivity improving film, surface protective film, or the like, such as a surface layer of an FPD or the like.

### BRIEF DESCRIPTION OF DRAWINGS

FIG. 1 is a schematic view of an example of a production method of an antireflective film according to the present invention; and
FIG. 2 is a schematic view of an example of a continuous producing apparatus for explaining the production method of the antireflective film according to the present invention.

### BEST MODE(S) FOR CARRYING OUT THE INVENTION

### [Production of mold]

The antireflective film of the present invention is obtained by: processing a surface of an aluminum material, by mechanical polishing, chemical polishing and/or electrolytic polishing; subsequently producing a pattern of mold having taper-shaped pores on the surface of the aluminum material, by combining a formation of an anodic oxide coating based on anodic oxidation of the surface of the aluminum material, with etching of the anodic oxide coating; and transferring the pattern of mold onto an antireflective film-forming material.

Here, the aluminum material in case of the present invention may be any material containing aluminum as its main component, and may be either of pure aluminum (1000-series) or an aluminum alloy. The pure aluminum in case of the present invention is aluminum with a purity of 99.00% or higher, preferably a purity of 99.50% or higher, and more preferably a purity of 99.85% or higher. Although the aluminum alloy is not particularly limited in type, examples thereof include an A1-Mn based alloy (3000-series), an Al-Mg based alloy (5000-series), an Al-Mg-Si based alloy (6000-series), and the like. Preferable among them are: the pure aluminum (1000-series); an aluminum alloy 5005, in that the same is relatively less in addition amount of Mg and is thus improved in corrosion resistance, thereby enabling to obtain excellent "taper-shaped pores"; a modified version of the aluminum alloy 5005 (such as 58D5 manufactured by Nippon Light Metal Co., Ltd.); and the like.

Although the aluminum material in case of the present invention is not particularly limited in type, it is desirable to directly adopt an industrially rolled aluminum plate, extruded pipe, drawn pipe, or the like for a decreased cost, a simplified process, and the like, because he aluminum material is subjected to conduction of polishing to be described later in the present invention.

As a method for polishing a surface of the aluminum material, it is possible to adopt any one of mechanical polishing, chemical polishing, and electrolytic polishing, or any combination thereof. The surface of the aluminum material is polished to uniformalize it, so that an antireflective film obtained by adopting the surface obtained by processing the uniformalized surface as a mold is remarkably improved in light transmissivity such as haze and the like. Particularly, it is possible to obtain an antireflective film having a haze of 15% or less, only when the polishing is conducted.

Although Ra and Ry of the surface of the aluminum material obtained by the polishing are not particularly limited insofar as the haze of the antireflective film is resultingly made to be 15% or less, the Ra of the surface of the aluminum material obtained by polishing is to be preferably 0.1µm or less, more preferably 0.03µm or less, and particularly preferably 0.02µm or less. Further, the Ry is to be preferably 1µm or less, more preferably 0.5µm or less, and particularly preferably 0.35µm or less. Here, the Ra and Ry are values obtained according to JIS B0601 (1994), respectively, where Ra is an "arithmetic mean roughness" and Ry is a "maximum height". The haze is likely to become 15% or less by such Ra and/or Ry, and the above-described effect of the present invention is likely to be exhibited then.

From an exemplary standpoint to further improve a light transmissivity such as haze of the obtained antireflective film, it is preferable to adopt electrolytic polishing only, mechanical polishing only, a combination of electrolytic polishing and chemical polishing, a combination of mechanical polishing and chemical polishing, a combination of electrolytic polishing and mechanical polishing, and a combination of electrolytic polishing, mechanical polishing, and chemical polishing; and preferable among them are electrolytic polishing only, or those combinations including electrolytic polishing. Further among them, the method configured to conduct mechanical polishing and subsequently electrolytic polishing is particularly preferable, in that the above-described effect is remarkably exhibited, and the processing is facilitated, then. The respective polishing methods will be described hereinafter in detail.

### <1-1. Mechanical Polishing>

Mechanical polishing is not particularly limited and may be conducted according to a usual manner, and examples thereof specifically include buff polishing, grinder buff polishing, router polishing, belt sander polishing, brush polishing, steel wool polishing, sand blast polishing, liquid honing, shaped polishing, lathe polishing, barrel polishing, lap polishing, and the like; which may be adopted solely in one kind, or mixedly in any combination. Among them, the buff polishing, lathe polishing, lap polishing together with buff polishing, and the like are preferable in that a surface of an aluminum material for an applicable application can be effectively processed then in a manner to resultingly provide an antireflective film having an excellently polished surface and having a lower haze, and particularly preferable among them are: buff polishing such as single-sided flat buffing, board buffing, bias buffing, or the like; and precision lathe polishing.

Abrasives to be used are not particularly limited, and it is enough to adopt a typically used abrasive. Specifically, it is enough to appropriately select from among diamond, cubic boron nitride, silicon carbide, corundum, cerium oxide, and the like, correspondingly to a polishing method to be adopted, an intended pattern, and the like. Optimizing them enables to improve a light transmissivity such as haze and the like of the obtained antireflective film. From a standpoint to further uniformalize a surface of an aluminum material, it is preferable to adopt: buff polishing which adopts, as an abrasive, corundum exhibiting an excellent compatibility with an aluminum material; board buffing which adopts colloidal silica as an abrasive; bias buffing which adopts an abrasive oil based on silicic anhydride; and precision lathe polishing which adopts a diamond bite. Optimizing these polishing conditions enables to cause a haze of an obtained antireflective film to be 15% or less.

In case of lapping, a grinding fluid is used as required, and it is enough to adopt a typically known water-soluble or oil-soluble grinding fluid. Only, it is preferable to use a water-soluble grinding fluid, from such exemplary standpoints that: damages such as scratches are rarely caused; the grinding fluid is excellent in permeability as a coolant liquid; the grinding fluid is low in processing resistance; an influence on an aluminum surface can be decreased; and cleaning is facilitated.

After mechanical polishing, it is preferable to conduct scrub cleaning so as to remove an abrasive attached to a surface of an aluminum material. The cleaning method is not particularly limited, insofar as the surface of the aluminum material is not damaged. Examples of an apparatus to be used in a cleaning process specifically include an ultrasonic cleaner, a brush scrub cleaner, a pure water spin cleaning drier, an RCA cleaner, a functional water cleaner, and the like.

### <1-2. Chemical Polishing>

Chemical polishing in case of the present invention is a method for polishing a surface of an aluminum material by exerting a polishing liquid onto it to thereby cause a chemical reaction therebetween, and may be conducted according to a usual manner, without particular limitations. Specifically, examples of the method include a phosphoric acid-nitric acid method, a Kaiser method, Alupol I, IV, and V methods, a General Motor method, a phosphoric acid-acetic acid-copper salt method, a phosphoric acid-nitric acid-acetic acid method, an Alcoa R5 method, and the like. Appropriately selecting a polishing liquid, a temperature, a time, and the like depending on a chemical polishing method to be used, enables to obtain an antireflective film having a haze of 15% or less. Among them, the phosphoric acid-nitric acid method and the phosphoric acid-acetic acid-copper salt method are preferable from standpoints of bath management, actual results, finishing of a polished surface, and the like.

The preferable processing temperature in the phosphoric acid-nitric acid method is 70°C to 120°C, and more preferably 80°C to 100°C, and the preferable polishing time is 30 seconds to 20 minutes, and more preferably 1 minute to 15 minutes. Further, the polishing liquid is a mixed liquid having a composition of 40 to 80vol% of phosphoric acid, 2 to 10vol% of nitric acid, and balance water.

### <1₋3. Electrolytic Polishing>

Electrolytic polishing in case of the present invention is a method for polishing a surface of an aluminum material by electrolysis in an electrolytic solution, and may be conducted according to a usual manner, without any particular limitations. The method is configured to use an aluminum material as an anode in a manner to flow a direct current therethrough to thereby polish a surface of the aluminum material, in a solution such as an acidic solution brought into a state where the aluminum material is scarcely dissolved therein due to a smaller amount of water. Specifically, examples of the method include a Kaiser method, a phosphoric acid method, an Erftwerk method, an Aluflex method, and the like. Polished surfaces are different depending on used electrolytic solutions, electric current values, processing temperatures, times, and the like, respectively; and appropriately selecting them enables to obtain an antireflective film having a haze of 15% or less.

Among them, the phosphoric acid method, a phosphoric acid-sulfuric acid method are typical, and are preferable from standpoints of bath management, finishing, and surface characteristics to be obtained. As a preferable electrolysis condition for the phosphoric acid method, the temperature is typically 40°C to 90°C, preferably 50°C to 80°C, and the electric-current density is preferably 20 to 80A/dm², and more preferably 30 to 60A/dm². Preferable as an electrolytic solution to be used, is a 85 to 100vol% phosphoric acid. Further, the material may be immersed in a nitric acid solution after the electrolytic polishing, so as to remove an oxide film.

### <1-4. Degreasing Treatment>

It is also preferable to conduct a degreasing treatment as required, before conducting the mechanical polishing, chemical polishing and/or electrolytic polishing. Examples of the degreasing treatment method include an organic solvent method, a surfactant method, a sulfuric acid method, an electrolytic degreasing method, an alkaline degreasing method, an emulsifying degreasing method, a phosphate method, and the like. It is preferable to conduct a noncorrosive degreasing treatment, from a standpoint that an aluminum material surface is not to be roughened more than required.

### <2-1. Anodic Oxidation>

Anodic oxidation in case of the present invention is configured to adopt an aluminum material as an anode in an acidic solution, and to flow an electric current through the anode in a manner to react oxygen produced by electrolysis of water with the aluminum, thereby forming an aluminum oxide coating having pores at a surface thereof.

As an electrolytic solution therefor, it is possible to adopt any one of electrolytic solutions based on sulfuric acid, oxalic acid, sulfuric acid, and chromic acid without particular limitations insofar as the electrolytic solution is an acidic one, and the oxalic acid based electrolytic solution is preferable from standpoints that the coating to be obtained thereby is excellent in strength as a mold, and that a desired pore dimension is obtainable thereby.

Although the condition of anodic oxidation is not particularly limited insofar as the above-described mold having an intended pattern is made up, the condition in case of adopting oxalic acid as an electrolytic solution is as follows. Namely, the concentration thereof is preferably 0.01 to 0.5M, more preferably 0.02 to 0.3M, and particularly preferably 0.03 to 0.1M. The application voltage therefor is preferably 20 to 120V, more preferably 40V to 110V, particularly preferably 60 to 105V, and further preferably 80 to 100V. The solution temperature is preferably 0 to 50°C, more preferably 1 to 30°C, and particularly preferably 2 to 10°C. The one-time treatment time is preferably 5 to 500 seconds, more preferably 10 to 250 seconds, particularly preferably 15 to 200 seconds, and further preferably 20 to 100 seconds. Conducting the anodic oxidation under the condition within such ranges enables to produce a "mold having taper-shaped pores" for forming an antireflective film having the above-described pattern, in a manner combined with an etching condition to be described hereinafter. In case of adopting another acid, it is also preferable to adopt a condition, which is substantially the same as the above.

Excessively higher voltages result in excessively wider average periods of formed pores, thereby occasionally resulting in excessively wider average periods of convexities or concavities formed on a surface of an antireflective film obtained by transferring a pattern of applicable mold onto an antireflective film-forming material. In turn, excessively lower voltages result in excessively narrower average periods of pores, thereby occasionally resulting in excessively narrower average periods of convexities or concavities formed on a surface of an antireflective film obtained by transferring a pattern of applicable mold onto an antireflective film-forming material. The voltage is adjusted to be held within the above-described range, because it is indispensable for the antireflective film of the present invention that the convexities or concavities present on the surface of the antireflective film are present at an average period between 50nm inclusive and 400nm inclusive, at least in a certain single direction.

Excessively longer treatment times occasionally result in excessively larger depths of concavities/heights of convexities of an antireflective film, and excessively shorter treatment times occasionally result in excessively smaller depths of concavities/heights of convexities of an antireflective film, thereby occasionally deteriorating an antireflective effect to be expected. Further, it is preferable to alternatingly repeat the anodic oxidation and etching to be described later, from a standpoint of processing operation.

### <2-2. Etching>

Etching is conducted for a main reason to enlarge pore diameters of an anodic oxide coating, to obtain a mold having a desired pattern. Combining the anodic oxidation with the etching enables to adjust: diameters of taper-shaped pores formed on the anodic oxide coating on an aluminum material surface; the taper shapes; heights and depths of concavities/convexities forming the pores, respectively; and the like.

Usable as a method for etching is a typically used one, without particular limitation. For example, it is possible to use, as an etching solution, a solution of an acid such as phosphoric acid, nitric acid, acetic acid, sulfuric acid, chromic acid, or the like, or a mixed liquid thereof. Preferable as the acid is phosphoric acid or nitric acid, and phosphoric acid is particularly preferable from a standpoint that a required dissolution rate is obtainable, and a more uniform surface is obtainable then.

It is enough to appropriately adjust the concentration of the etching solution, an immersion time therein, a temperature thereof, and the like in a manner to obtain a desired pattern, and the condition in case of phosphoric acid is as follows. Namely, the concentration of the etching solution is preferably 1 to 20wt%, more preferably 1.2 to 10wt%, and particularly preferably 1.5 to 2.5wt%. The solution temperature is preferably 30 to 90°C, more preferably 35 to 80°C, and particularly preferably 40 to 60°C. The one-time treatment time (immersion time) is preferably 1 to 60 minutes, more preferably 2 to 40 minutes, particularly preferably 3 to 20 minutes, and further preferably 5 to 10 minutes. Conducting the etching under the condition within such ranges enables to produce a "mold having taper-shaped pores" for forming an antireflective film having the above-described pattern, in a manner combined with the above-described condition for anodic oxidation. In case of adopting another acid, it is also preferable to adopt a condition, which is substantially the same as the above.

The anodic oxidation treatment and the etching treatment are combined with each other, thereby enabling to obtain a desired "mold having taper-shaped pores". It is noted that the expression "combined with" implies to firstly conduct the anodic oxidation treatment, and then to alternatingly repeat the noted treatments. It is also preferable to conduct water washing between the treatments. The number of combination times of anodic oxidation and etching is to be appropriately adjusted so as to obtain a desired pattern, and the number of combination times is preferably 1 to 10 times, more preferably 2 to 8 times, and particularly preferably 3 to 6 times.

In case of obtaining a "pattern of mold having taper-shaped pores" to be transferred to the antireflective film of the present invention, the particularly preferable combination is to conduct the anodic oxidation by an oxalic acid water solution and to conduct the etching by a phosphoric acid water solution. Further, the preferable condition as a whole is a combination of the above-described preferable conditions.

### [Pattern of antireflective film surface]

Further, it is indispensable for the antireflective film of the present invention to be patterned to have, on at least one surface thereof, convexities having an average height between 100nm inclusive and 1,000nm inclusive, or concavities having an average depth between 100nm inclusive and 1,000nm inclusive, and the antireflective film has a haze of 15% or less. Herein, the convexity implies a portion protruded from a reference plane, and the concavity implies a portion recessed from a reference plane. The antireflective film of the present invention may have convexities or may have concavities, on its surface. Further, the antireflective film may have both convexities and concavities; and moreover, the antireflective film may be patterned to have a wavy texture where such convexities and concavities are coupled to one another.

Although convexities or concavities may be provided on both surfaces of the antireflective film, it is indispensable for the antireflective film to have them on at least one surface of the antireflective film. Particularly, it is preferable that the antireflective film has them at an outermost obverse surface contacted with air. This is because, air is largely different from the antireflective film of the present invention in refractive index, such that the antireflective property, transmission improving property, and the like of the antireflective film are excellently exhibited, by virtue of a fact that an interface between the substances mutually different in refractive index is established into a specific texture of the present invention.

It is desirable for the convexities or concavities to be uniformly present over a whole surface of the antireflective film, for exhibition of the above-described effect. In case of convexities, it is indispensable therefor that they have an average height between 100nm inclusive and 1,000nm inclusive from a reference plane, and that the antireflective film has a haze of 15% or less; and in case of concavities, it is also indispensable therefor that they have an average depth between 100nm inclusive and 1,000nm inclusive from a reference plane, and that the antireflective film has a haze of 15% or less. Although the heights or depths are not necessarily required to be constant and it is enough for them to have an average value kept within the above range, it is desirable for them to have substantially constant heights or substantially constant depths, respectively.

In either case of convexities or concavities, the average height or average depth is to be preferably 150nm or more, and particularly preferably 200nm or more. Further, the average height or average depth is preferably 600nm or less, and particularly preferably 500nm or less. Excessively smaller average heights or average depths occasionally lead to failure of exhibition of excellent optical characteristics, and excessively larger average heights or average depths occasionally lead to difficulty in production, for example. In case of possession of a wavy texture where convexities and concavities are coupled to one another, it is preferable that the average length between highest portions (tops of the convexities) and deepest portions (bottoms of the concavities) is between 100nm inclusive and 1,000nm inclusive, from the same reason.

It is indispensable for the antireflective film of the present invention that the convexities or concavities are arranged on the surface of the antireflective film such that an average period at least in a certain single direction is made to be between 100nm inclusive and 400nm inclusive. The convexities or concavities may be randomly arranged, or may be arranged with a regularity. In each case, it is preferable for the convexities or concavities to be substantially uniformly arranged over a whole surface of the antireflective film, from a standpoint of antireflective property, transmission improving property, and the like. Further, it is enough for the convexities or concavities to be arranged such that the average period thereof is made to be between 50nm inclusive and 400nm inclusive at least in a certain single direction, and the average period is not required to be between 50nm inclusive and 400nm inclusive in all directions.

Although it is enough for the convexities or concavities to be arranged such that the average period thereof in at least in a certain single direction is made to be between 50nm inclusive and 400nm inclusive as described above when the convexities or concavities are arranged with a regularity, it is preferable that the convexities or concavities are arranged such that the period thereof in a direction (hereinafter called "x-axis direction") where a period is shortest, is made to be between 50nm inclusive and 400nm inclusive. Namely, the period is to be preferably within the above-described range, when the direction where the period is shortest is taken as the certain single direction. Further, at that time, it is particularly preferable that the period in a y-axis direction orthogonal to the x-axis direction is also made to be between 50nm inclusive and 400nm inclusive.

The average period (or simply "period", when a regularity is found in arranged locations of the convexities or concavities) is preferably 80nm or more, and particularly preferably 150nm or more. Further, the average period is preferably 250nm or less, and particularly preferably 200nm or less. Excessively shorter average periods or excessively longer average periods occasionally fail to sufficiently obtain an antireflective effect.

It is indispensable for the antireflective film of the present invention to have, on its surface, the above-described texture, and it is preferable for the antireflective film to have a texture, which is typically called "moth eye texture" (texture of eye of moth), from a standpoint of possession of an excellent antireflective property. It is also preferable for the antireflective film to have a surface texture described in any one of the Patent Document 1 to Patent Document 10, from the same standpoint of excellent antireflective property.

In turn, although aspect ratios, which are values each obtained by dividing a convexity height or concavity depth by the average period, are not particularly limited, the aspect ratios are preferably 1 or more, particularly preferably 1.5 or more, and further preferably 2 or more, from a standpoint of optical characteristic. Further, the aspect ratios are preferably 5 or less, and particularly preferably 3 or less, from a standpoint of an antireflective film producing process.

The antireflective film of the present invention is exemplarily decreased in light reflectivity and improved in light transmissivity by providing the surface of the antireflective film with the above-described texture, and the light transmissivity is further allowed to be more improved by conducting the above-described polishing. In this case, the "light" implies to include at least those light beams at wavelengths in a visible range.

### [Haze of antireflective film]

It is indispensable for the antireflective film in the present invention to have the pattern of the concavities/convexities and to have a haze of 15% or less. The haze is a percentage of a diffuse transmittance relative to a total transmittance, and the haze in the present invention is defined as what is measured according to a method described in Examples. Excessively larger hazes occasionally lead to insufficiency of visibility assurance of an FPD. By polishing a surface of an aluminum material to be established into a mold, an antireflective film obtained by using the mold is enabled to have a haze of 15% or less, and is remarkably improved in light transmissivity. Particularly, it is allowed to obtain an antireflective film having a haze of 15% or less, only when the above-described polishing is conducted prior to anodic oxidation. It is indispensable for the haze to be 15% or less, preferably 12% or less, more preferably 8% or less, particularly preferably 5% or less, and further preferably 2% or less.

### [Configuration and Forming Method of Antireflective Film]

The antireflective film of the present invention is produced by adopting the mold and the film-forming material as described above. The film-forming material is not particularly limited insofar as the same is capable of forming the above-described surface pattern of the antireflective film and having a haze of 15% or less, and it is possible therefor to preferably use any one of curable compositions and thermoplastic compositions. Only, the antireflective film of the present invention has an extremely fine surface texture in a manner that the antireflective film has, on its surface, convexities or concavities having an average height/depth between 100nm inclusive and 1,000nm inclusive, and that the convexities or concavities are present at an average period between 50nm inclusive and 400nm inclusive, at least in a certain single direction. Thus, it is preferable to adopt a curable composition, from such standpoints to provide a mechanical strength suitable for such a fine texture, and to achieve a separability from an anodic oxide coating acting as a mold.

### <1. Curable Composition>

Curable compositions are those compositions which are cured by photoirradiation, electron-beam irradiation, and/or heating. Among them, those curable compositions are preferable which are cured by photoirradiation or electron-beam irradiation, from the above-described standpoint.

### <1-1. Curable composition to be cured by photoirradiation or electron-beam irradiation>

The "curable composition to be cured by light irradiation or electron-beam irradiation" (hereinafter abbreviated to "photo-curable composition") is not particularly limited, and it is possible to use any one of: an acrylic polymerizable composition or methacrylic polymerizable composition (hereinafter abbreviated to "(meth)acrylic polymerizable composition"); a composition crosslinkable by a photoacid catalyst; and the like. Only, the (meth)acrylic polymerizable compositions provides a mechanical strength suitable for the fine texture of the present invention, and is thus preferable from standpoints of: a separability from an anodic oxide coating acting as a mold; capability of preparing antireflective films having various physical properties, by virtue of an abundant number of compound groups therefor; and the like.

### <1-2. Heat-curable composition>

The heat-curable composition in the present invention is not particularly limited insofar as the same is a composition which is polymerized by heating to thereby form a network structure of polymer, and cured in a manner not to return into an original state; and examples thereof include a phenol-based polymerizable composition, a xylene-based polymerizable composition, an epoxy-based polymerizable composition, a melamine-based polymerizable composition, a guanamine-based polymerizable composition, a diallyl phthalate-based polymerizable composition, a urea-based polymerizable composition, an unsaturated polyester-based polymerizable composition, an alkyd-based polymerizable composition, a polyurethane-based polymerizable composition, a polyimide-based polymerizable composition, a furan-based polymerizable composition, a polyoxybenzoyl-based polymerizable composition, a maleic acid-based polymerizable composition, a melamine-based polymerizable composition, and a (meth)acrylic polymerizable composition. Examples of the phenol-based polymerizable composition include a resol type phenol resin, and the like. Examples of the epoxy-based polymerizable composition include a bisphenol A-epichlorohydrin resin, an epoxy novolak resin, an alicyclic epoxy resin, a brominated epoxy resin, an aliphatic epoxy resin, a polyfunctional epoxy, and the like. Examples of the unsaturated polyester-based polymerizable composition include an orthophthalic acid-based one, an isophthalic acid-based one, an adipic acid-based one, a HET acid-based one, a diallyl phthalate-based one, and the like. Among them, the (meth)acrylic polymerizable composition is desirable as a heat-curable composition.

### <1-3. (Meth)acrylic polymerizable composition>

Namely, the antireflective film of the present invention is to be preferably provided so that carbon-carbon double bonds of (meth)acryl groups of a (meth)acrylic polymerizable composition are reacted with one another by photoirradiation, electron-beam irradiation and/or heating. Further, the phrase "by photoirradiation, electron-beam irradiation and/or heating" implies that the reaction is conducted by any one treatment, combined any two treatments, or combined all three treatments, selected from among a group consisting of photoirradiation, electron-beam irradiation, and heating.

Although the antireflective film of the present invention is to be preferably provided so that carbon-carbon double bonds of (meth)acryl groups are reacted with one another, and the reaction ratio is not particularly limited, the reaction ratio is to be preferably 80% or more, and particularly preferably 90% or more. Herein, the "reaction ratio" is obtained based on ratios between an absorbance at 1,720cm attributing to a carbon-oxygen bond of an ester bond and an absorbance at 811cm⁻¹ attributing to a carbon-carbon bond thereof, for the (meth)acrylic polymerizable composition before and after exposure, where the absorbances are each measured by an infrared (IR) spectroscopy, and specifically by an attenuated total reflection method (ATR method) by means of a Fourier transformation infrared spectrophotometer "Spectrum One D" (manufactured by PerkinElmer Co., Ltd.). Excessively lower reaction ratios occasionally bring about deterioration of mechanical strength and deterioration of chemical resistance of antireflective films.

The (meth)acrylic polymerizable composition is not particularly limited insofar as the same is preferably capable of forming the above-described fine texture and achieving a haze of 15% or less, and the composition is to preferably contain urethane (meth)acrylate and ester (meth)acrylate. The "urethane (meth)acrylate" implies a (meth)acrylate compound having a urethane bond in a molecule. Further, the "ester (meth)acrylate" implies a (meth)acrylate compound, which compound has, in a molecule thereof, an ester bond obtained by a reaction between an acidic group (embracing acid anhydride, acid chloride, and the like) and a hydroxyl group, and which compound has no urethane bonds nor siloxane bonds.

It is also desirable for the (meth)acrylic polymerizable composition in the present invention to further contain epoxy (meth)acrylate. The "epoxy (meth)acrylate" implies a (meth)acrylate compound having a structure obtained by a reaction of (meth)acrylic acid with an epoxy group.

Further, it is desirable for the antireflective film of the present invention to be obtained by polymerization of a composition containing a modified silicone oil. The "modified silicone oil" implies a compound having a siloxane bond in a molecule, where an organic group other than a methyl group is also bonded to the silicon atom (Si). The "modified silicone oil" embraces a silicone (meth)acrylate. Thus, it is also preferable for the (meth)acrylic polymerizable composition in the present invention, to contain a silicone (meth)acrylate. The "silicone (meth)acrylate" implies a (meth)acrylate compound having a siloxane bond in a molecule.

### [1] Re Urethane (meth)acrylate

The urethane (meth)acrylate to be used in the present invention is not particularly limited, and the sites of urethane bonds, the number thereof, and the sites of (meth)acryl groups and the number thereof are not particularly limited, for example.

Examples of urethane (meth)acrylate having a preferable chemical structure to be used for the film-forming material in the present invention, include: (A) one having such a structure obtained by reacting, a compound having in a molecule a hydroxyl group and a (preferably multiple) (meth)acryl group(s), with a compound having in a molecule a (preferably multiple) isocyanate group; and (B) one having such a structure obtained by once reacting a diisocyanate compound, triisocyanate compound, or the like, with a compound having multiple hydroxyl groups, and by subsequently reacting an unreacted isocyanate group of the obtained compound, with a compound such as hydroxyethyl (meth)acrylate which has a hydroxyl group and a (meth)acryl group in a molecule.

The (meth)acrylate compound is to contain urethane (meth)acrylate, in a manner to increase a curing ability and a reaction ratio of the obtained antireflective film, so that the antireflective film is increased in storage modulus and improved in elasticity.

Particularly preferable as urethane (meth)acrylate are those containing tetra- or more functional urethane (meth)acrylate. Namely, the urethane (meth)acrylate is to preferably contain a compound having four or more (meth)acryl groups in a molecule. In this case, the sites of urethane bonds, the number thereof, and the like are not particularly limited, and it is not particularly limited as to whether the (meth)acryl groups are located at an end of molecule or not, for example. Particularly preferable is a compound having 6 or more (meth)acryl groups in a molecule, and further preferable is a compound having 10 or more (meth)acryl groups in a molecule. Further, although the upper limit of the number of (meth)acryl groups in a molecule is not particularly limited, 15 or less groups are particularly preferable. Excessively smaller numbers of (meth)acryl groups in a urethane (meth)acrylate molecule occasionally decrease a curing ability and a reaction ratio of the obtained structural body, thereby decreasing a scratch resistance and a mechanical strength thereof. In turn, excessively larger numbers of (meth)acryl groups in a urethane (meth)acrylate molecule occasionally fail to sufficiently increase a consuming ratio of carbon-carbon double bonds of (meth)acryl groups by polymerization, i.e., a reaction ratio.

### [2] Re Ester (meth)acrylate

It is desirable for a (meth)acrylic polymer for forming an antireflective film of the present invention to contain urethane (meth)acrylate in addition to ester (meth)acrylate. Containing this ester (meth)acrylate softens the antireflective film, thereby providing an excellent mechanical strength of a surface having the specific texture in the present invention. Further, the urethane (meth)acrylate used for improving a curing ability and the like, enables to prevent deterioration of resiliency of the antireflective film. Containing only urethane (meth)acrylate without containing this ester (meth)acrylate results in an excessively softened antireflective film, thereby occasionally resulting in a deteriorated mechanical strength.

The ester (meth)acrylate is not particularly limited, and preferable examples thereof include bi- or more functional (meth)acrylate compounds. Examples of the bifunctional (meth)acrylate include linear alkanediol di(meth)acrylate, alkylene glycol di(meth)acrylate, partial (meth)acrylic acid ester of tri- or more hydric alcohol, bisphenol-based di(meth)acrylate, and the like. Containment of bifunctional ester (meth)acrylate increases a curing ability, and is thus preferable from a standpoint of an increased mechanical strength, and the like. Among bifunctional (meth)acrylates, it is preferable for a further increased curing ability to contain such a bifunctional ester (meth)acrylate having an alkylene glycol chain and having, at both ends of a molecule, single (meth)acryl groups, respectively.

Examples of trifunctional (meth)acrylate include glycerin PO-modified tri(meth)acrylate, trimethylolpropane tri(meth)acrylate, trimethylolpropane EO-modified tri(meth)acrylate, trimethylolpropane PO-modified tri(meth)acrylate, isocyanuric acid EO-modified tri(meth)acrylate, isocyanuric acid EO-modified ε-caprolactone-modified tri(meth)acrylate, 1,3,5-triacryloylhexahydro-s-triazine, pentaerythritol tri(meth)acrylate, dipentaerythritol tri(meth)acrylate tripropionate, and the like.

Examples of tetra- or more functional (meth)acrylate include pentaerythritol tetra(meth)acrylate, dipentaerythritol penta(meth)acrylate monopropionate, dipentaerythritol hexa(meth)acrylate, tetramethylolethane tetra(meth)acrylate, oligoester tetra(meth)acrylate, and the like.

### [3] Re Epoxy (meth)acrylate

It is also preferable for the (meth)acrylic polymer for forming the antireflective film of the present invention, to contain epoxy (meth)acrylate. Containment of this epoxy (meth)acrylate makes the antireflective film to be stiffer, and makes the mechanical strength such as scratch resistance of the surface having the specific texture in the present invention to be more improved.

The "epoxy (meth) acrylate" is not particularly limited, and examples thereof include those each having a structure obtained by adding (meth)acrylic acid to: diglycidyl ethers of alkylene glycol, such as ethylene glycol diglycidyl ether, diethylene glycol diglycidyl ether, triethylene glycol diglycidyl ether, propylene glycol diglycidyl ether, dipropylene glycol diglycidyl ether, and tripropylene glycol diglycidyl ether; glycerin glycidyl ethers such as glycerin diglycidyl ether; diglycidyl ethers of bisphenol-based compounds, such as bisphenol A diglycidyl ether, hydrogenated bisphenol A diglycidyl ether, PO-modified diglycidyl ether of bisphenol A, and bisphenol F diglycidyl ether; and the like. The examples further include one having a structure obtained by adding (meth)acrylic acid to a condensation polymerized epoxy resin. The examples further include one having a structure obtained by adding (meth)acrylic acid to an epoxy resin having a structure obtained by exemplarily reacting epichlorohydrin with a condensation polymer of phenol novolak, cresol novolak, or the like.

### [4] Re Modified silicone oil

It is also preferable for the (meth)acrylic polymer for forming the antireflective film of the present invention, to contain a modified silicone oil. Containment of the modified silicone oil in the (meth)acrylate compound increases a storage modulus of the obtained antireflective film, and improves the mechanical strength such as scratch resistance for the specific surface pattern. It is noted that, the formation of the antireflective film of the present invention includes a step for separating a cured antireflective film from a mold, so that the pattern-forming ability is to be emphasized then. However, the usage of the modified silicone oil in the present invention is effective for improving a surface scratch resistance, rather than improving the pattern-forming ability.

The modified silicone oil is to preferably have a number-average molecular weight of 400 to 20,000, and particularly preferably 1,000 to 15,000. Excessively larger number-average molecular weights occasionally deteriorate a compatibility of the oils with other components, and excessively smaller number-average molecular weights occasionally deteriorate surface scratch resistances.

### [5] Formulation of (meth)acrylic polymerizable composition

Although the containment ratio among urethane (meth)acrylate, ester (meth)acrylate, epoxy (meth)acrylate, and modified silicone oil in the (meth)acrylic polymerizable composition is not particularly limited, the ester (meth)acrylate is to be preferably contained in an amount of 10 parts by weight or more, and particularly preferably 20 parts by weight or more, relative to 100 parts by weight of the urethane (meth)acrylate. The upper limit of the former is preferably 400 parts by weight or less, more preferably 300 parts by weight or less, particularly preferably 200 parts by weight or less, and most preferably 100 parts by weight or less.

It is preferable to contain the epoxy (meth)acrylate in an amount of 0 to 50 parts by weight, particularly preferably 0 to 20 parts by weight, and further preferably 1 to 10 parts by weight, relative to 100 parts by weight of the urethane (meth)acrylate. In turn, it is preferable to contain the modified silicone oil in an amount of 0 to 10 parts by weight, particularly preferably 0.02 to 5 parts by weight, and further preferably 0.05 to 2 parts by weight, relative to 100 parts by weight of the urethane (meth)acrylate. Excessively larger amounts of the modified silicone oil occasionally lead to segregation thereof in an antireflective film to make the antireflective film opaque, thereby failing to achieve a haze of 15% or less, and excessively smaller amounts occasionally lead to deteriorated surface scratch resistances.

The (meth)acrylic polymerizable composition of the present invention is allowed to contain therein other (meth)acrylates, a polymerization initiator, and the like, in addition to those described above.

In case that the antireflective film of the present invention is to be formed by photoirradiation to the (meth)acrylic polymerizable composition, the presence or absence of a photopolymerization initiator in the (meth)acrylic polymerizable composition to be used as the material for the antireflective film is not particularly limited. However, it is preferable to contain a photopolymerization initiator therein. The photopolymerization initiator is not particularly limited, and examples thereof include those known ones having been conventionally used for radical polymerization, such as: arylketone-based photopolymerization initiators such as acetophenones, benzophenones, alkylaminobenzophenones, benzyls, benzoins, benzoin ethers, benzyldimethylacetals, benzoylbenzoates, and α-acyloxime esters; sulfur-containing photopolymerization initiators such as sulfides, and thioxanthones; acylphosphine oxides such as acyldiarylphosphine oxide; anthraquinones; and the like. It is also possible to combiningly use a photosensitizer.

The blending amount of the photopolymerization initiator is selected to typically fall within a range of 0.2 to 10 parts by weight, and preferably 0.5 to 7 parts by weight, relative to 100 parts by weight of the (meth)acrylate compound.

In case that the antireflective film of the present invention is formed by thermal polymerization of the (meth)acrylic polymerizable composition, it is preferable for the same to contain a thermal polymerization initiator. Usable as the thermal polymerization initiator are those known ones having been conventionally used for radical polymerization, and examples thereof include a peroxide, a diazo compound, and the like.

### <2. Thermoplastic composition>

The thermoplastic composition is not particularly limited insofar as the same is softened by heating it up to a glass transition point or melting point thereof, and examples thereof include: styrene-based polymer composition such as an acrylonitrile-styrene-based polymer composition, an acrylonitrile-chlorinated polyethylene-styrene-based polymer composition, a styrene-(meth)acrylate-based polymer composition, and a butadiene-styrene-based polymer composition; polyolefin-based compositions such as a vinyl chloride-based polymer composition, an ethylene-vinyl chloride-based polymer composition, an ethylene-vinyl acetate-based polymer composition, a propylene-based polymer composition, a propylene-vinyl chloride-based polymer composition, a propylene-vinyl acetate-based polymer composition, a chlorinated polyethylene-based composition, and a chlorinated polypropylene-based composition; ketone-based polymer compositions; polyacetal-based compositions; polyester-based compositions; polycarbonate-based compositions; polyvinyl acetate-based compositions; polyvinyl-based compositions; polybutadiene-based compositions; and poly(meth)acrylate-based compositions.

Further, it is also possible to blend, into the (meth)acrylic polymerizable composition of the present invention, a binder polymer, fine particles, an antioxidant, an ultraviolet absorber, a photostabilizer, an anti-foaming agent, a mold lubricant, a lubricant, a levelling agent, and the like. These components are usable by appropriately selecting from among conventionally known ones.

### [Production method of antireflective film]

As the production method of the antireflective film of the present invention, the following method is preferable, for example. Namely, the antireflective film-forming material is collected onto a substrate, and coated over it by using a coater such as a bar coater, applicator, or the like, or by using a spacer, so as to achieve a uniform film thickness. Here, preferable as the "substrate" is a film made of polyethylene terephthalate (hereinafter abbreviated to "PET"), triacetyl cellulose, or the like. Then, the mold having the above-described surface texture is matedly applied onto the film-forming material. After the mating application, in case that the film-forming material is a curable composition, the film-forming material is cured by ultraviolet irradiation or electron-beam irradiation and/or heating, from a surface of the film as the substrate. Alternatively, it is also possible to directly collect the antireflective film-forming material onto a mold having the above-described surface texture, and to subsequently prepare the material into a coated film having a uniform film thickness by means of a coater, spacer, or the like. Then, the antireflective film to be resultingly obtained thereafter is separated from the mold, thereby producing an antireflective film of the present invention.

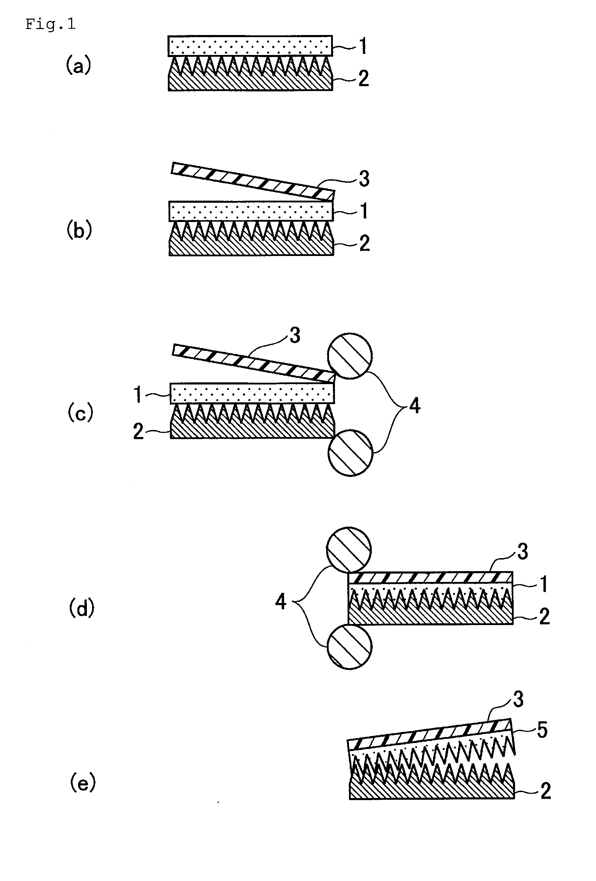

Although the production method will be specifically explained further with reference to FIG. 1, the present invention is not limited to a specific embodiment of FIG. 1. Namely, the method is configured to supply or coat an appropriate amount of an antireflective film-forming material 1 onto a mold 2 (FIG. 1(a)), and to obliquely laminate a substrate 3 onto the antireflective film-forming material, about a roller portion side as a fulcrum (FIG. 1(b)). The laminate established by integration of the mold 2, antireflective film-forming material 1, and substrate 3 is moved to rollers 4 (FIG. 1(c)), and is pressure jointed with one another by the rollers to thereby transfer the specific texture possessed by the mold 2 onto the antireflective film-forming material 1 to form the texture thereon (FIG. 1(d)). The material is cured, and then separated from the mold 2 (FIG. 1(e)), thereby obtaining an antireflective film 5 intended by the present invention.

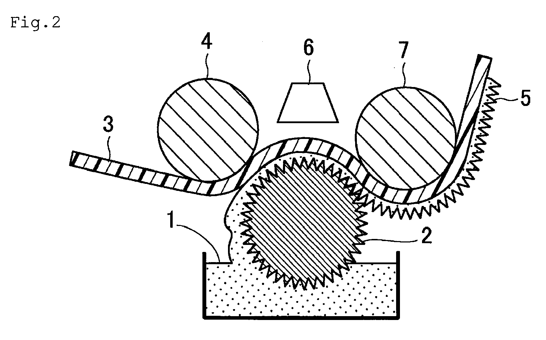

FIG. 2 is a schematic view of an example of an apparatus for continuously producing an antireflective film, and the present invention is not limited to this schematic view. Namely, the antireflective film-forming material 1 is deposited onto the mold 2, a force is applied thereto by the roller 4 to laminate the substrate 3 onto the mold from an oblique direction, thereby transferring the specific texture possessed by the mold 2 onto the antireflective film-forming material 1. The material is cured by a curing device 6, and thereafter separated from the mold 2, thereby obtaining an antireflective film 5 intended by the present invention. Provided is a supporting roller 7 for pulling up the antireflective film 5.

The oblique application by the roller(s) 4 enables to obtain the antireflective film 5 which is free of entrainment of air bubbles, with out any defects. Further, adopting the roller(s) leads to application of a linear pressure to thereby enable to increase the pressure, so that an antireflective film having a large area is allowed to be produced, and adjustment of a pressure is facilitated. Moreover, it is enabled to produce an antireflective film having a uniform film thickness integrated with a substrate, and having predetermined optical and physical properties, with an improved productivity by virtue of the capability of continuous production.

Although the antireflective film of the present invention is to be preferably derived from polymerization by photoirradiation, electron-beam irradiation and/or heating, the wavelength of light in case of the photoirradiation is not particularly limited. Basically, the light is to be preferably one containing visible light and/or ultraviolet light, in that the light then acts to excellently polymerize carbon-carbon double bonds of (meth)acryl groups in the presence of the photopolymerization initiator. Particularly preferable is the light containing ultraviolet light. The light source is not particularly limited, and usable are known ones such as an ultra-high pressure mercury lamp, high pressure mercury lamp, halogen lamp, various lasers, and the like. In case of electron-beam irradiation, the electron beam is not particularly limited in strength, wavelength, and the like, and known methods are usable.

In case of conducting the polymerization by heating, although the temperature thereof is not particularly limited, 80°C or higher is preferable, and 100°C or higher is particularly preferable. Further, the temperature is preferably 200°C or lower, and particularly preferably 180°C or lower. Excessively lower polymerization temperatures occasionally lead to failure of sufficient progression of polymerization, and excessively higher polymerization temperatures occasionally lead to nonuniform polymerization, occurrence of deterioration of the substrate, and the like. Although the heating time is not particularly limited as well, the same is preferably 5 seconds or longer, and particularly preferable 10 seconds or longer. Further, the heating time is preferably 10 minutes or shorter, particularly preferably 2 minutes or shorter, and further preferably 30 seconds or shorter.

### [Operation and Principle]

While the antireflective film of the present invention possesses an excellent light transmissivity, this is considered to be brought about by virtue of polishing of a surface of an aluminum material to be established into a mold. It appears to be a conventional situation to anodically oxidize a surface of an aluminum material to be established into a mold, so that it is supposed that polishing of the surface prior to the anodic oxidation has been considered to be unnecessary. It is further considered that, since it has been certainly possible to prevent reflection by a specific surface texture such that a haze has been considered to be sufficient as it is, a further improved light transmissivity has not been demanded. Moreover, it appears to be a conventional situation to give importance only to production of an antireflective film first of all because satisfactory antireflective film-forming materials have not been provided yet, such that materials have not reached such a technical level to remarkably lower a haze, specifically down to 15% or less, resulting in that no ideas have been envisaged to polish a surface of a mold. Nonetheless, by virtue of development of curable compositions and the like as noted above, the situation has reached such a level to further improve a haze, so that the present inventors have narrowly envisaged to polish a surface of a mold.

The operation and principle for enabling to achieve a haze of 15% or less by polishing an aluminum surface is not clear, and the present invention is never limited to the following operation and principle. Nonetheless, the operation and principle are supposed to be as follows. Namely, it is supposed that, although concavities/convexities or irregularities which are larger in size order or longer in pitch than those in the specific surface pattern of the antireflective film of the present invention will affect a haze, the haze is decreased in the present invention because such concavities/convexities or irregularities have been removed by polishing. Specifically, it is supposed that such concavities/convexities, irregularities, or the like which are larger in size order are not perfectly removed insofar as by anodic oxidation, so that an improvement of haze has been limited even when a fine texture is formed on such concavities/convexities, irregularities or the like.

### EXAMPLES

Although the present invention will be described hereinafter in detail with respect to Examples, the present invention is not limited to these Examples insofar as within the spirit or scope of the present invention.

### Example 1

### <Production of mold>

A rolled aluminum plate of 99.85% (2mm thickness) as an aluminum material was polished for 10 minutes by a single-sided flat buff polishing machine (manufactured by Speedfam Co., Ltd.) and by adopting an alumina-based abrasive (produced by FUJIMI INCORPORATED), to obtain a mirror surface. The polished surface was scrub cleaned, and a non-corrosive degreasing treatment was conducted thereafter.

Further, the following condition of anodic oxidation was combined with the following etching (pore diameter enlarging) treatment condition for the formed anodic oxide coating, to produce a mold having taper-shaped pores.

### <Condition of anodic oxidation>

Used solution: 0.05M oxalic acid
Voltage: DC voltage of 80V
Temperature: 5°C
Time: 50 seconds

### <Condition of etching>

Used solution: 2wt% phosphoric acid
Temperature: 50°C
Time: 5 minutes

The anodic oxidation and the etching (pore diameter enlarging) were alternatingly repeated 5 times, to obtain an anodic oxide coating surface having taper-shaped pores having a period of 200nm, a pore opening diameter of 160nm, a bottom diameter of 50nm, and a pore depth of 500nm.

### <Production of antireflective film>

The following photo-curable composition (a) as an antireflective film-forming material was collected onto a PET film, and coated over it by a bar coater No. 28 so as to achieve a uniformly coated film thickness. Thereafter, the above obtained mold was matedly applied thereto, and then ultraviolet light was irradiated thereto to polymerizingly cure the photo-curable composition, after confirming that the photo-curable composition was filled into the pores. After curing, the cured film was separated from the mold, to obtain an antireflective film having, on its surface, convexities having an average height of 500nm and present at an average period of 200nm.

### <Preparation of photo-curable composition>

The photo-curable composition (a) was obtained by: 11.8 parts by weight of a compound (1) represented by the following formula (1); 23.0 parts by weight of the following compound (2); 45.2 parts by weight of tetraethylene glycol diacrylate; 20.0 parts by weight of pentaerythritol hexaacrylate; and 2.0 parts by weight of 1-hydroxycyclohexylphenylketone as a photopolymerization initiator.

The compound (1) is one represented by the following formula (1): 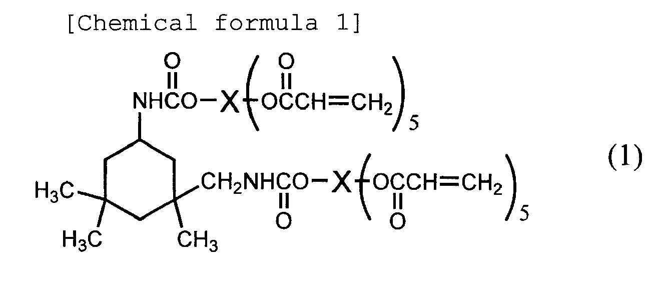 [in the formula (1), X represents a residue of dipentaerythritol (having 6 hydroxyl groups).]

The compound (2) is one represented by:
2HEA--IPDI--(hydroxyl group-ended polyester of adipic acid and 1,6-hexanediol, with a weight-average molecular weight of 3,500)--IPDI--2HEA.
Here, "2HEA" represents 2-hydroxyethyl acrylate, "IPDI" represents isophorone diisocyanate, and "--" indicates a bond derived from an isocyanate group and a hydroxyl group based on the following typical reaction therebetween:

   -NCO+HO- → -NHCOO-

### Example 2

Conducted was the same procedure as Example 1 to obtain an antireflective film, except that polishing was conducted by a board buff with an abrasive containing colloidal silica (produced by FUJIMI INCORPORATED) as a main component, instead of polishing by an alumina-based abrasive in Example 1.

### Example 3

Conducted was the same procedure as Example 1 to obtain an antireflective film, except that polishing was conducted by a bias buff (manufactured by Koyo-Sha Co., Ltd.) with a silicic anhydride-based abrasive oil (produced by ICHIGUCHI Corporation), instead of polishing by an alumina-based abrasive in Example 1.

### Example 4

Conducted was the same procedure as Example 1 to obtain an antireflective film, except that mirror cutting was conducted by fixing the aluminum material to a precision face lathe by means of a chuck, with a natural diamond bite, instead of polishing by an alumina-based abrasive in Example 1.

### Example 5

Conducted was the same procedure as Example 1 to obtain an antireflective film, except that the aluminum material was processed in a polishing liquid at 95°C for 3 minutes with vibration, the polishing liquid being obtained by mixing 60vol% of phosphoric acid with 5vol% of nitric acid; instead of polishing by an alumina-based abrasive in Example 1.

### Example 6

Conducted was the same procedure as Example 1 to obtain an antireflective film, except that the aluminum material was used as a positive electrode and electrolyzed in a 90vol% phosphoric acid bath at 70°C at an electric-current density of 40A/dm² for 5 minutes with vibration, and thereafter the aluminum material was immersed in a nitric acid bath (provided by diluting a commercially available about 68% nitric acid, two times) at 20°C for 10 minutes, to thereby dissolve and remove an oxide film at the surface of the aluminum material; instead of polishing by an alumina-based abrasive in Example 1.

### Example 7

Conducted was the same procedure as Example 1 to obtain an antireflective film, except that polishing was conducted by a bias buff (manufactured by Koyo-Sha Co., Ltd.) with a silicic anhydride-based abrasive oil (produced by ICHIGUCHI Corporation), and then the aluminum material was processed in a polishing liquid at 95°C for 3 minutes with vibration, the polishing liquid being obtained by mixing 60vol% of phosphoric acid with 5vol% of nitric acid; instead of polishing by an alumina-based abrasive in Example 1.

### Example 8

Conducted was the same procedure as Example 1 to obtain an antireflective film, except that polishing was conducted by a board buff with an abrasive containing colloidal silica as a main component, the polished surface was scrub cleaned, a non-corrosive degreasing treatment was conducted thereafter, the aluminum material was then used as a positive electrode and electrolyzed in a 90vol% phosphoric acid bath at 70°C at an electric-current density of 40A/dm² for 5 minutes with vibration, and thereafter the aluminum material was immersed in a nitric acid bath (provided by diluting a commercially available about 68% nitric acid, two times) at 20°C for 10 minutes, to thereby dissolve and remove an oxide film at the surface of the aluminum material; instead of polishing by an alumina-based abrasive in Example 1.

### Example 9

Conducted was the same procedure as Example 1 to obtain an antireflective film, except that the aluminum material was polished into a quasi-mirror surface by a single-sided flat lapping machine while combiningly using a water-soluble grinding fluid (produced by KEMET JAPAN Co., Ltd.), the polished surface was scrub cleaned, a non-corrosive degreasing treatment was conducted thereafter, then the aluminum material was used as a positive electrode and electrolyzed in a 90vol% phosphoric acid bath at 70°C at an electric-current density of 40A/dm² for 5 minutes with vibration, and thereafter the aluminum material was immersed in a nitric acid bath (provided by diluting a commercially available nitric acid, two times) at 20°C for 10 minutes, to thereby dissolve and remove an oxide film at the surface of the aluminum material; instead of polishing by an alumina-based abrasive in Example 1.

### Example 10

Conducted was the same procedure as Example 1 to obtain an antireflective film, except that an extruded aluminum alloy 5005 pipe (outer diameter 30mm) was lathed by a precision lathe (manufactured by EGURO Ltd.) and a single crystal diamond bite (manufactured by TOKYO Diamond Corporation) while using a kerosene as a lubricant, at a high-speed rotation; instead of polishing the rolled aluminum plate of 99.85% (2mm thickness) by adopting an alumina-based abrasive in Example 1.

### Example 11

Conducted was the same procedure as Example 1 to obtain an antireflective film, except that a drawn pipe of modified version of aluminum alloy 5005 (outer diameter 30mm) was lathed by a precision lathe and a compax diamond bite while using a kerosene as a lubricant, at a high-speed rotation, the aluminum material was subsequently used as a positive electrode and electrolyzed in a 90vol% phosphoric acid bath at 70°C at an electric-current density of 40A/dm² for 5 minutes with vibration, and thereafter the aluminum material was immersed in a nitric acid bath (provided by diluting a commercially available about 68% nitric acid, two times) at 20°C for 10 minutes, to thereby dissolve and remove an oxide film at the surface of the aluminum material; instead of polishing the rolled aluminum plate of 99.85% (2mm thickness) by adopting an alumina-based abrasive in Example 1.

### Example 12

Conducted was the same procedures as Example 1 to obtain antireflective films, except that the photo-curable compositions (b) to (g) listed in Table 1 were used, instead of using the photo-curable composition (a) in Example 1.

**[Table 1]**

| Classification | Name of compound | Number of functional groups | (b) | (c) | (d) | (e) | (f) | (g) |
|---|---|---|---|---|---|---|---|---|
| Urethane (meth)acrylate | Compound | 10 | 47.5 | 47.5 | 11.8 | 11.8 | 11.8 | 11.8 |
| | (1) Compound (2) | 2 | | | 23 | 23 | 23 | 23 |
| Ester (meth)aczylate | Tetraethylene glycol diacrylate | 2 | | | 45.2 | 45.2 | 45.2 | 45.2 |
| | polyethylene glycol #600 diacrylate | 2 | 47.5 | 47.5 | | | | |
| | Dipentaerythritol hexaacrylate | 6 | | | 20 | 20 | 20 | 20 |
| Epoxy (math)acrylate | Bisphenol A-based epoxyacrylate | 2 | 5 | 5 | | | | |
| Modified silicone oil | Tego R a d 2200N | 2 | 0.5 | | | | | |
| | x-24-B201 | 1 | | | 0.5 | | | |
| | x-22-2426 | 1 | | | | 0.5 | | |
| | FL100-100st | 0 | | | | | 0.5 | |
| | FL100-450st | 0 | | | | | | 0.5 |
| Photopolymerization initiator | 1-hydroxycycclohexylghenylketane | | 5 | 5 | 5 | 5 | 5 | 5 |

In Table 1, "TegoRad2200N" is a side-chain methacryl polyether-modified silicone oil produced by Degussa AG, "X-24-8201" and "X-22-2426" are one-end methacrylalkyl-modified silicone oils produced by Shin-Etsu Chemical Co., Ltd., respectively, and "FL100-100st" and "FL100-450st" are side-chain fluoroalkyl-modified silicone oils produced by Shin-Etsu Chemical Co., Ltd., respectively.

### Comparative Example 1

Conducted was the same procedure as Example 1 to obtain an antireflective film, except that polishing by an alumina-based abrasive in Example 1 was not conducted.

### Comparative Example 2

Conducted was the same procedure as Example 5 to obtain an antireflective film, except that the processing in the polishing liquid of phosphoric acid and nitric acid in Example 5 was not conducted.

### Comparative Example 3

Conducted was the same procedure as Example 6 to obtain an antireflective film, except that the electrolysis in the phosphoric acid bath in Example 6 was not conducted.

### <Evaluation>

### [Ra, Ry]

Values of Ra and Ry of the surfaces of "aluminum materials after processing by mechanical polishing, chemical polishing and/or electrolytic polishing" obtained in Examples 1 to 11 are listed below, together with values of Ra and Ry of the surfaces of the "aluminum materials" in Comparative Examples. Ra and Ry were measured according to JIS B0601 (1994).

| No. | Ra (µm) | Ry (µm) |
|---|---|---|
| Example 1 | 0.035 | 0.45 |
| Example 2 | 0.035 | 0.45 |
| Example 3 | 0.034 | 0.45 |
| Example 4 | 0.035 | 0.44 |
| Example 5 | 0.034 | 0.45 |
| Example 6 | 0.032 | 0.38 |
| Example 7 | 0.033 | 0.27 |
| Example 8 | 0.029 | 0.27 |
| Example 9 | 0.018 | 0.19 |
| Example 10 | 0.035 | 0.45 |
| Example 11 | 0.022 | 0.19 |
| Comparative Example 1 | 0.50 | 2.00 |
| Comparative Example 2 | 0.50 | 2.00 |
| Comparative Example 3 | 0.50 | 2.00 |

The antireflective films obtained in Example 1 to Example 11, and Comparative Example 1 to Comparative Example 3 were measured in terms of haze, transparency, and reflectivity, as follows. The results are shown in Table 2.

### [Haze]

Haze for visible light was measured by a haze meter "HGM-2DP" manufactured by Suga Test Instruments Co., Ltd.

### [Transparency]

Transparency of each antireflective film was evaluated and determined by visual inspection, based on the following criteria:
⊚: extremely excellent transparency
○: excellent transparency
Δ: slightly lower transparency, but at acceptable level
×: inferior transparency

### [Reflectivity]

Adhered to a reverse surface of each antireflective film was a black tape, and each film was subjected to measurement of 5° incident absolute reflectivity by a self-recording spectrophotometer "UV-3150" manufactured by SHIMADZU CORPORATION.

**[Table 2]**

| | Haze | Transparency | Reflectivity (%) |
|---|---|---|---|
| Example 1 | 10.5 | Δ | 0.1 |
| Example 2 | 10.2 | Δ | 0.1 |
| Example 3 | 10.8 | Δ | 0.1 |
| Example 4 | 11 | Δ | 0.1 |
| Example 5 | 10 | Δ | 0.1 |
| Example 6 | 2 | ○ | 0.1 |
| Example 7 | 6.5 | Δ | 0.1 |
| Example 8 | 1 | ⊚ | 0.1 |
| Example 9 | 0.9 | ⊚ | 0.1 |
| Example 10 | 11 | Δ | 0.1 |
| Example 11 | 0.9 | ⊚ | 0.1 |
| Comparative Example 1 | 39.5 | × | 0.1 |
| Comparative Example 2 | 39.5 | × | 0.1 |
| Comparative Example 3 | 39.5 | × | 0.1 |

As seen from Table 2, Example 1 to Example 11 as antireflective films of the present invention were all 15% or less in haze, and were all excellent in "transparency" by visual inspection. Namely, the antireflective films of the present invention each had an excellent antireflective property for light and a light transmissivity. In turn, all the antireflective films obtained in Comparative Example 1 to Comparative Example 3 were large in haze, and inferior in transparency. On the other hand, in Example 12 where photo-curable compositions (b) to (g) were individually used, all the antireflective films were 15% or less in haze and also excellent in "transparency" by visual inspection, by all the polishing methods in Example 1 to Example 11, respectively.

Further, the antireflective films according to the present invention were also excellent in "wear resistance" and "antifouling property". Moreover, when the (meth)acrylic polymerizable compositions were heat-cured or electron-beam cured, the obtained antireflective films were the same as the above-described ones in antireflective property and transmissivity, respectively.

### INDUSTRIAL APPLICABILITY

The antireflective film of the present invention provides an excellent visibility therethrough because the same is excellent in antireflective property for light, light transmissivity, and the like, so that the antireflective film is preferably and widely utilizable in application of flat panel displays (FPD) such as a liquid crystal display (LCD), plasma display (PDP), organic EL (OEL), CRT, field emission display (FED), and the like. More generally, the antireflective film of the present invention is preferably and widely utilizable as an antireflective film itself, a transmissivity improving film, a surface protective film, or the like.

The present application is based on a Japanese patent application No. 2008-138444 filed on May 27, 2008, which is incorporated herein in its entirety by reference as a disclosure of the present specification of the present invention.

### EXPLANATIONS OF LETTERS OR NUMERALS

- 1:: antireflective film-forming material
- 2:: mold
- 3:: substrate
- 4:: roller
- 5:: antireflective film
- 6:: curing device
- 7:: supporting roller

## Claims

1. An antireflective film, obtained by:
processing a surface of an aluminum material, by mechanical polishing, chemical polishing and/or electrolytic polishing;
subsequently producing a pattern of mold having taper-shaped pores on the surface of the aluminum material, by combining a formation of an anodic oxide coating based on anodic oxidation of the surface of the aluminum material, with etching of the anodic oxide coating; and
transferring the pattern of mold onto an antireflective film-forming material;
wherein the antireflective film has, on a surface thereof, convexities having an average height between 100nm inclusive and 1,000nm inclusive, or concavities having an average depth between 100nm inclusive and 1,000nm inclusive, and the convexities or concavities are present at an average period between 50nm inclusive and 400nm inclusive, at least in a certain single direction; and
wherein the antireflective film has a haze of 15% or less.

2. The antireflective film according to claim 1, wherein the surface of the aluminum material after processing by mechanical polishing, chemical polishing and/or electrolytic polishing, has an arithmetic mean roughness Ra of 0.1µm or less.

3. The antireflective film according to claim 1 or 2, wherein the anodic oxidation is conducted in an electrolytic solution, under a condition of an oxalic acid concentration thereof between 0.01M inclusive and 0.5M inclusive, an application voltage between 20V inclusive and 120V inclusive, and a temperature of the electrolytic solution between 0°C inclusive and 50°C inclusive.

4. The antireflective film according to claim 1 or 2, wherein the etching is conducted in an etching solution, under a condition of a phosphoric acid concentration thereof between 1wt% inclusive and 20wt% inclusive, a temperature of the etching solution between 30°C inclusive and 90°C inclusive, and a one-time processing time between 1 minute inclusive and 60 minutes inclusive.

5. The antireflective film according to claim 1 or 2, wherein the antireflective film-forming material is a curable composition which is curable by light irradiation, electron-beam irradiation and/or heating.

6. The antireflective film according to claim 5, wherein the curable composition is an acrylic polymerizable composition or methacrylic polymerizable composition.

7. A mold having a pattern of taper-shaped pores, for forming the antireflective film according to claim 1 or 2, wherein the mold is produced by combining:
anodic oxidation to be conducted in an electrolytic solution, under a condition of an oxalic acid concentration thereof between 0.01M inclusive and 0.5M inclusive, an application voltage between 20V inclusive and 120V inclusive, and a temperature of the electrolytic solution between 0°C inclusive and 50°C inclusive;
with etching to be conducted in an etching solution, under a condition of a phosphoric acid concentration thereof between 1wt% inclusive and 20wt% inclusive, a temperature of the etching solution between 30°C inclusive and 90°C inclusive, and a one-time processing time between 1 minute inclusive and 60 minutes inclusive.
